# EUROPEAN PATENT SPECIFICATION

(11) **EP 0 766 023 B1**
(45) Date of publication and mention of the grant of the patent: **21.05.2003**
(21) Application number: 96306986.9
(22) Date of filing: 25.09.1996
(51) Int. Cl.: F16H 49/00

(54) **Harmonic drive transmissions and components therefor, and their method of manufacture**
Spannungswellen-Getriebe, Bauteile dafür und deren Herstellverfahren
Transmission harmonique, éléments de transmission et méthode pour leur fabrication

(30) Priority: 25.09.1995 US 533394
(43) Date of publication of application: 02.04.1997
(73) Proprietor: TEIJIN SEIKI BOSTON, INC., Peabody, Massachusetts 01960 (US)
(72) Inventor: Foley, Steven J., Stoneham, Massachusetts 02180 (US); Michaud, Joseph A., Peabody, Massachusetts 01960 (US)
(74) Representative: Warren, Anthony Robert

(56) References cited:
- US-A- 3 196 713
- US-A- 4 934 212
- PATENT ABSTRACTS OF JAPAN vol. 009, no. 322 (M-440), 18 December 1985 & JP 60 155324 A (NTN TOYO BEARING KK), 15 August 1985,

## Description

This invention relates to harmonic drive transmissions, and more particularly to the manufacture of hermetically sealed harmonic drive transmissions.

Harmonic drive devices have been utilized for quite a few years, wherever a lightweight, compact, high ratio transmission of power is needed. All harmonic drive transmissions employ three basic elements. Those elements are a circular spline, a flexspline, and a wave generator, assembled normally with the circular spline fixed in a non-rotating arrangement, and with the flexspline rotating as the output element. The wave generator, which typically functions as the input element, would be rotated by a primary power source. Teeth on the flexspline and the circular spline are cut to the same circular pitch. However, the flexspline is somewhat smaller in circumference than the circular spline, and it has fewer teeth. The numerical difference in the number of teeth is always a multiple of the number of lobes on the wave generator.

An early example drive transmission, is shown in U.S. Patent 2,969,266 to C.W. Musser, issued March 22, 1960, the Patent being entitled "Strain Wave Gearing Tubular Shaft". Since that time, harmonic drive transmissions have been used for azimuth drives for antenna systems, or rotary cable drives for welding positioners, for valve actuators, for consumer products such as door openers or actuators or automotive closures, for microscope focusing knobs or for steering mechanisms on rocket booster propulsion systems.

There are certain industries, however, where rotary power is needed, yet contamination from any part of the machinery within the worked field would be critical to the work product. The provision of positive, accurately controlled transmission of motion through an uninterrupted metallic barrier is desired, also in those certain fields. Since no packing, bellows or fallible seal is used, some containment of contamination utilizing a harmonic drive transmission may be obtained. Such a unit is shown in US-A-3,196,713 to H.A. Robinson, issued July 27, 1965, entitled "Hermetically Sealed Transmissions" and which is considered as closest prior art. Such a unit may provide typical rotary-to-rotary power utilizing the same three basic components of harmonic drive transmissions, but their configuration has been altered to meet the specific feed through requirement. The flexspline is a flexible walled tube with one end enclosed by welding its edge to a disc or diaphragm, and the other end of the tube is bolted or welded to a mounting flange. The wave generator, operating inside the stationary flexspline deflects the walls of the tube and flexspline combination into engagement with the circular spline, which functions as the output member and delivers a rotation in the same direction as the input.

It is an object of the present invention, to provide an improvement over the hermetically sealed transmissions of the prior art harmonic drive units.

It is yet a further object of the present invention, to provide a hermetically sealed harmonic drive transmission which may be utilized in a field where contamination of any sort would be absolutely critical to the product being produced.

The present invention relates to a method for manufacturing a flexspline device, and a hermetically sealed harmonic drive transmission incorporating the same, which is intended to be utilized in environments where contamination would be critical, such as in the electronic industry in the manufacture of computer chips.

According to one aspect of the present invention, there is provided a method of manufacturing a harmonic drive flexspline device as defined in claim 1. The method may also include the steps defined in claim 2.

The invention is also directed to a harmonic drive transmission device generally of the type disclosed in US-A-3,196,713 and defined in the preamble of claim 3. The device according to the invention is defined in the characterising clause of claim 3. The device may also include the feature defined in claim 4.

In the manufacture of a flexspline device and transmission embodying the present invention, a flexspline device of flaring shape will be shown, of a shape similar to that shown in US-A-3,196,713, to which attention is directed, though it will be understood that flexsplines of different shapes may be employed. However, the flexsplines are basically generally cup-shaped.

In the flexspline embodying the present invention, the closed-end flexspline, and the mounting flange to which a normal flexspline would be otherwise attached, are made in one unitary piece from a forging. Such a one-piece forging is made from a bar of stainless steel shaped something like a bell. The forging is first placed, for example in a turning center of an appropriate milling machine, on which the outside surface or diameter is machined down to a rough tooling dimension. The forging is then re-chucked on that outside diameter. Then the inside diameter may be drilled or otherwise formed to its rough internal diameter. The forging, i.e. the roughly machined flexspline stock, is again re-chucked, located against its internal dimension, and machined or otherwise formed to another tooling dimension on its rough external shape.

The rough flexspline stock is next re-chucked on that external tooling dimension, to permit the final finish of the internal configuration to be machined or otherwise formed. The flexspline now has an end cap, called a diaphragm, which is solid, and integral with the wall of the bell-shaped flexspline, and the wall of the flexspline, at its open end remote from the diaphragm, critically is also integral with its mounting flange.

The outside configuration or diameter of the device or component, comprising the combined flexspline, integral mounting flange and diaphragm, is then machined or otherwise formed to its final finish. This may be achieved by placing the flexspline device over a turning mandrel, and assembling an alignment mandrel around the combined turning mandrel and flexspline device. A vacuum is created to evacuate air from the bore in the flexspline via passages in the turning and alignment mandrel, and a molten low melting point metal alloy is introduced into the flexspline bore through the turning mandrel. The alloy is allowed to solidify in the bore, where it serves to internally support the hollow flexspline cup during the final machining operation, in which the walls of the flexspline device are turned down to the thin dimensions required. For example, the outer surface of the wall may be turned down to produce a thickness of about 0.25 mm (0.010 inches) and the diaphragm may be turned down to a thickness of about 0.51 mm (0.020 inches).

After the diaphragm, the flexspline wall, and mounting flange are all turned to the appropriate outer configuration, the mandrel with the flexspline device thereon is removed, and the combination is heated to just above the melting pointing of the low melting point alloy to, for example, about 54.4 degrees Celsius (130 degrees Fahrenheit), whereafter the turning mandrel and alloy are removed from the flexspline device.

The flexspline device may be incorporated in a harmonic drive unit which includes a first shaft, for example an output or driven shaft, having a distal end which is secured to a flange, which flange is bolted or otherwise secured to a first end of a circular spline which is formed closed, or is closed by the flange. The circular spline comprises an annular ring having a second, open end on which there is disposed an array of teeth. The closed end and adjacent tubular wall portion of the flexspline device, i.e. the cylindrical portion of the flexspline cup and the diaphragm extending across its distal end, are disposed within the bore- of the circular spline. The bell shaped or flared open or proximal end of the flexspline cup is integral with the mounting flange. The flexspline device thus is critically made of one unitary piece of stock so as to absolutely prevent leakage of gases or contaminants through the flexspline, which could occur if the diaphragm were welded to the wall of the flexspline. A solid forging of stock also permits the grains of the steel forming the walls and diaphragm to be oriented in a more leakproof way (that is, parallel to the walls) than if the flexspline were made in any other way. The annular array of flexspline teeth is engaged with the annular array of circular spline teeth. The flexspline teeth are disposed on the radially outwardly directed edge of the cylindrical portion wall of the flexspline. An annular wave generator is disposed radially inwardly of the flexspline teeth. The wave generator is mounted on a second, drive or input shaft which extends through a wall opening in a housing, which housing is utilized for the manufacture of contamination-free components, such as computer chips or sophisticated electronic devices. The annular wave generator has two or more lobes thereon, as is known in the harmonic drive transmission field. A ball bearing assembly is disposed on the radially outer periphery of the annular wave generator. The bearing assembly comprises an inner bearing race, an outer bearing race and plurality of circumferentially spaced roller balls therebetween.

The mounting flange, which is critically integral with the flexspline, may be welded or bolted along its annular periphery to the wall of the housing in which the products are to be made, to ensure contamination-free utilization of the harmonic drive transmission capabilities. The welding along this juncture does not have flexing forces acting upon it as do the diaphragm and flexspline walls.

In operation of the harmonic drive assembly, as is known in the art, the input or drive shaft rotates the annular wave generator within the stationary bell shaped (flared) flexspline. This rotation flexes the wall of the flexspline and induces a wave motion in the flexspline teeth, and hence, via the circular spline teeth, induces a rotary motion in the circular spline. The latter rotary motion causes rotary motion of the output or driven shaft which, in turn drives the appropriate mechanism within the housing of the contamination-free production area.

One aspect of the invention thus comprises a method of manufacturing a harmonic drive flexspline device, including a flexspline cup having an integral diaphragm at one closed end and an integral mounting flange at its other open end, comprising the steps of arranging a solid steel forging in a chuck arrangement in a metal turning machine, drilling a center bore within the solid steel forging, turning the external surface of the steel forging to a preset outside dimension, and machining the integral mounting flange on the open proximal end of the flexspline device, to its finished outer configuration.

The method may also include the steps of placing the rough turned solid steel forging in a machine tool for full bore drilling of the internal diameter of said flexspline cup device, placing the flexspline device with its finished internal bore onto a turning mandrel for support of said flexspline device, suction-drawing a low melting point alloy steel into the flexspline cup device for internal annular support of the flexspline walls during subsequent machining operations, supporting the turning mandrel in a turning machine, while turning the flexspline wall down to its finished dimension of about 0.25 mm (0.010 inches) and the integral diaphragm down to a thickness of about 0.51 mm (0.020 inches).

Another aspect of invention comprises a harmonic drive transmission device for the transmission of rotary energy from an input source to an output mechanism within a wall of a sealed housing while providing a hermetically sealed relationship to the output shaft within the sealed housing, comprising an input shaft having a wave generator arranged at one end thereof, the wave generator being rotatively disposed within a unitary flexspline having a diaphragm and mounting flange formed unitarily therewith, a circular spline rotatively supported around the flexspline in a gear tooth motion-communicating relationship therewith, the flexspline having a side wall, the side wall, the diaphragm and the mounting flange all being machined from a single solid forging of steel, so that the gear teeth on the flexspline and the circular spline engage one another in an advancing wave, to permit rotary motion to be provided to an output shaft, which output shaft actuates a mechanism within a hermetically sealed contamination-free production housing.

The unitary mounting flange may be attached to the inner side of said housing, to minimize the likelihood of contamination from components within the flexspline itself.

One embodiment of the present invention will now be described with reference to the accompanying drawings, in which:-
Figure 1 is a side elevational view of a flexspline forging showing the outer profiles overlaid thereon produced by successive machining operations or steps, the flexspline device being constructed according to the principles of the present invention;
Figures 2 a, b, c, and d, are views similar to Figure 1, showing the step wise process used in the manufacture of a flexspline device embodying the principles of the present invention; and
Figure 3 is a side elevational view, partly in section, of part of a harmonic drive assembly secured to a housing where contamination-free parts are manufactured.

The present invention relates to a process for manufacturing a hermetically sealed harmonic drive transmission which will be utilized in environments where contamination would be critical, such as in the electronic industry in the manufacture of computer chips.

In the manufacturing process embodying the present invention, a flexspline of a flaring or bell-shape will be shown, of a shape similar to that shown in U.S. Patent 3,196,713, incorporated herein by reference, though it will be understood that flexsplines of different shapes may be employed, which are preferably basically generally cup-shaped.

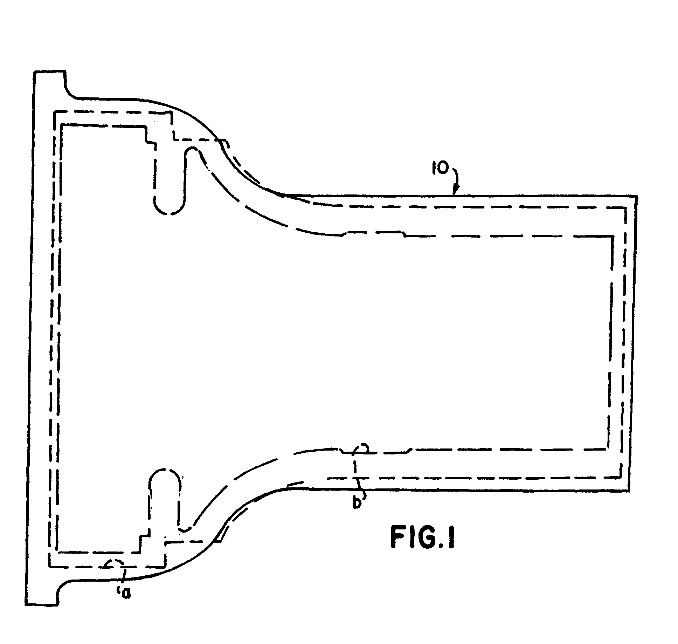

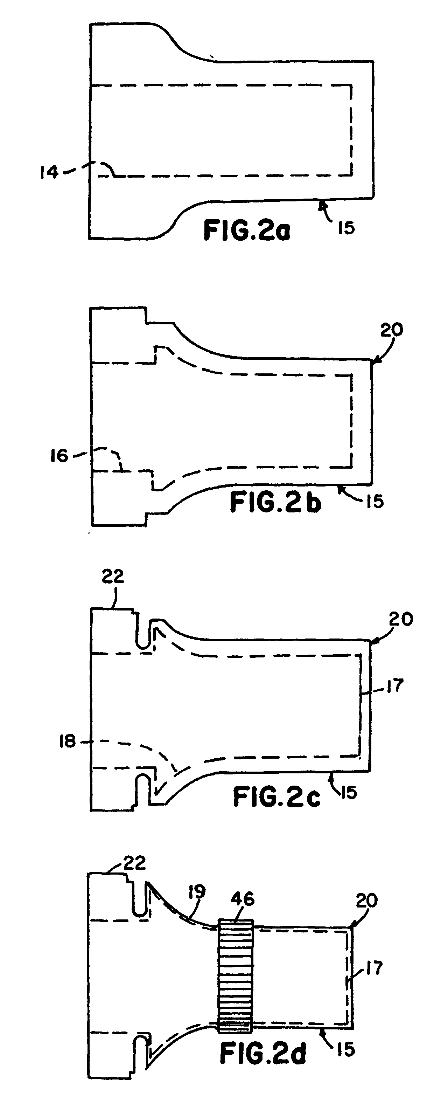

In accordance with the features of the present invention, the flexspline and the mounting flange to which a normal flexspline would be attached, are made of one unitary piece of forging 10, as shown in Figure 1. Such a one-piece forging 10 is made from a bar stock of stainless steel. Such a bar is placed in a chuck of a lathe of an appropriate turning center. The flexspline 15 is then machined to its rough external shape indicated by the profile line "a", and later to its final external shape as shown by the profile line "b". The rough outline is also shown in Figure 2a. The initial rough internal bore diameter is shown as dashed line 14 in Figure 2a, and the next rough bore shape is shown by line 16 in Figure 2b.

The rough flexspline stock is next re-chucked to permit the final inside finish internal bore configuration to be machined to the shape indicated by the dashed lines 18, as shown in Figure 2c. The flexspline 15 now has an "end cap" 20, which includes the diaphragm 17, which is solid and integral with the side wall of the flute (bell)-shaped flexspline 15. The side wall 19 of the flexspline, at its open end, critically is also integral with its mounting flange 22, as shown in Figure 2d.

The outside configuration of the device, comprising the combination of the flexspline 15 with the integral mounting flange 22 and diaphragm 17, is finished to the required final dimensions. Firstly, the flexspline device 15 is mounted on a turning/holding mandrel, not shown, with the mandrel extending into the flexspline bore 18. A hollow alignment mandrel or fixture, also not shown for clarity, is then assembled around the combination of the turning mandrel and the flexspline device 15. One end of the alignment mandrel is closed, and includes a housing part having a piston with a spring-loaded cup which presses against the external surface of the flexspline diaphragm. The other or head end of the alignment mandrel includes a housing part having an end wall provided with an opening through which the turning mandrel projects. The spring-loaded cup and piston arrangement serves to urge the open, flanged end of the flexspline device into sealing engagement with the turning mandrel, which is in turn urged into sealing engagement with the head end of the alignment mandrel. The head end of the alignment mandrel, and the turning mandrel incorporate intercommunicating passages, so that when a vacuum is applied to the head end of the alignment mandrel, air is evacuated from the bore 18 of the flexspline device 15. This permits a molten, low temperature melting point metal alloy, when poured through the center of the projecting end of the turning mandrel, to be drawn into and totally fill the bore of the flexspline 15 around the turning mandrel therein, following the path of the evacuated air. The alloy may be a low melting point alloy steel known as Cerro Metal 117, sold by the Cerro Metal Company. During filling, the flexspline and mandrel assembly may be heated to maintain the alloy in a molten state, for example by circulating hot water through passages in the mandrels and/or through the cavity or jacket formed between the flexspline device and the surrounding alignment mandrel.

After filling, and solidification of the alloy, which may be assisted by circulating cooling water through the latter passages and/or jacket, the alloy-filled flexspline device and the turning mandrel are removed from the alignment mandrel, preparatory to the final external machining operation. In that operation the turning mandrel with the flexspline device 15 thereon is installed on a lathe, not shown for clarity. The outer surface of the wall 19, or at least the part thereof which forms the active part of the flexspline, is then turned down to give a wall thickness of about 0.25 mm (0.010 inches), and the outer surface of the diaphragm 17 is turned down to give a wall thickness of about 0.51 mm (0.020 inches), as shown in the finished state in Figure 2d. During this machining operation, the solidified alloy filling externally supports the relatively thin wall of the flexspline and preferably also of the diaphragm.

After the diaphragm 17, the flexspline wall 19, and mounting flange 22 are all turned to the appropriate outer configuration, as shown in Figure 2d, the mandrel with the flexspline device 15 thereon is removed, and the combination is heated to just above the melting point of the low melting point alloy steel, for example, to about 54.4 degrees Celsius (130 degrees Fahrenheit), whereafter the mandrel and alloy are removed from within the flexspline device 15.

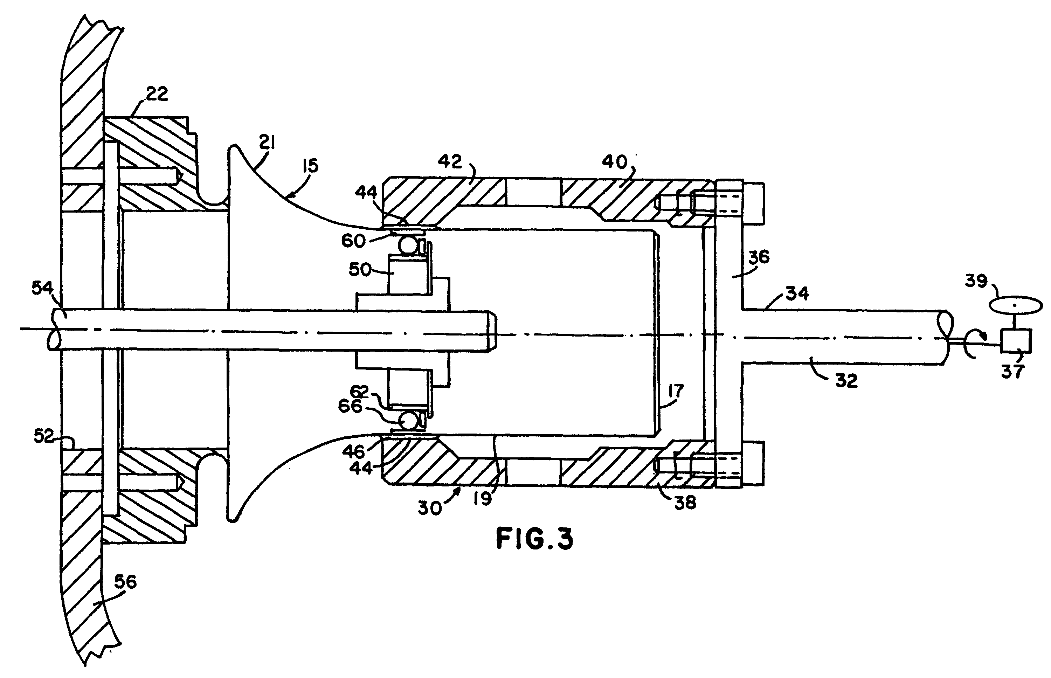

The finished flexspline device 15 is a component of a harmonic drive assembly 30, as shown in Figure 3, which includes a driven or first output shaft 32 having a distal end 34 which is secured to a flange 36. The flange 36 is bolted to a first end 38 of a circular spline 40. The end 38 may be closed, for example by the flange 36. The circular spline 40 comprises a rigid annular housing having a second, open end 42 on which there is disposed an array of radially inwardly directed circular spline teeth 44. The closed end 17/end cap 20 of the flared flexspline device 15 is disposed within the bore of the circular spline 40. The flared flexspline device 15 includes a cup-shaped wall having its diaphragm 17 extending across, and closing, its distal end. The flared open end 21 of the flexspline device 15 critically is integral with the mounting flange 22. The flexspline device is thus critically made of one unitary piece of stock device 15, which could occur if the diaphragm 17 and the wall 19 were formed as separate pieces welded to one another to make the flexspline, as in the prior art. A unitary flexspline and mounting flange machined from a solid forged bar also permits the grains of the steel forming the wall and diaphragm to be oriented (parallel to the wall) in a more leakproof way than if the flexspline were made in any other way. The annular array of flexspline teeth 46 is engaged with the circular spline teeth 44. The flexspline teeth 46 are disposed on the radially outwardly directed edge of the walls 19 of the flexspline 15.

An annular wave generator 50 is disposed radially inwardly of the flexspline teeth 46, as shown in Figure 3. The wave generator 50 is mounted on an input shaft 54 which extends through a wall opening 52 in a housing 56, which housing 56 may be utilized for the location and containment/manufacture of contamination-free components, such as computer chips or sophisticated electronic devices. The annular wave generator 50 has two or more lobes therein, as is known in the harmonic drive transmission field. A ball bearing assembly 60 is disposed on the radially outer periphery of the annular wave generator 50. The bearing assembly 60 comprises an inner bearing race 62, an outer bearing race 64, and circumferentially spaced plurality of roller balls 66 therebetween.

The mounting flange 22 which is critically integral with the flexspline 15, may be welded or bolted along its annular periphery to the wall of the housing in which the products are to be made, to ensure contamination-free utilization of the harmonic drive transmission capabilities.

In operation of the harmonic drive assembly 30, as is known in the art, the input shaft 54 rotates the lobed wave generator within the stationary flared flexspline 15. The mounting flange 22 seals the open end of the flexspline to the housing 56. The mounting flange 22 is considerably heavier and thicker than the flexspline, sufficient to provide the anchoring and stability needed, while the walls of the flexspline where the radially outwardly directed teeth are, may have a wave-like motion imparted therein. Rotation of the wave generator 50 within the flared flexspline 15 thus induces rotary motion of the circular spline 40, and hence rotary motion of the output shaft 32. That rotary motion of the output shaft 32 causes rotary motion of an appropriate gearing 37, thereby to turn production mechanisms, such as a carousel 39 of X-ray lithography equipment for the manufacture of electronic chips or like substrates, where contamination from anything, including that which might come from gear transmissions, and which might enter the housing 56 of the contamination-free production area, must be avoided. The harmonic drive assembly 30 in the preferred embodiment is arranged on the inner side of the wall comprising the housing 56, so that the bearings 66, the wave generator 50 and the input shaft 54 are not exposed to any atmosphere within the housing 56, which might otherwise contaminate any product being manufactured therewithin, and the evacuated area within the production housing is exposed only to the area radially outwardly of the flexspline, and not to the bearings and associated mechanisms therewithin.

## Claims

1. A method of manufacturing a harmonic drive flexspline device (15), including a flexspline cup having an integral diaphragm (17) at one closed end (20) and an integral mounting flange (22) at its other open end, comprising the steps of:
arranging a solid steel forging (10) in a chuck arrangement in a metal turning machine;
forming a center passage within said forging;
turning the external surface of said forging to a preset outside dimension or profile;
machining said integral mounting flange (22) at the open end of said flexspline device, to its finished outer configuration.

2. The method of claim 1, including the steps of:
rough-turning the external surface of said forging;
placing said rough-turned forging in a machine tool for full bore drilling of the internal profile or diameter of said flexspline cup;
placing the finished internal bore (19) onto a turning mandrel for support of said flexspline device;
suction-drawing a low melting point alloy steel into said flexspline cup, for internal annular support of the flexspline wall during subsequent machining operations; and
supporting said turning mandrel in a turning machine, while turning said flexspline wall down to a finished thickness dimension of about 0.25 mm (0.010 inches) and said integral diaphragm down to a thickness dimension of about 0.51 mm (0.020 inches).

3. A harmonic drive transmission device for the transmission of rotary energy from an input source to an output mechanism within a wall of a sealed housing while providing a hermetically sealed relationship to said output mechanism within said sealed housing, comprising:
an input shaft (54) having a wave generator (50) arranged at one end thereof, said wave generator being rotatively disposed within a flexspline device (15) comprising a flexspline cup having a side wall (19), closed at one end by a diaphragm (17), and having a mounting flange (22) at the other open end of the side wall; and
a circular spline (40) rotatively supported around said flexspline device and provided with gear teeth (44) in a gear tooth motion-communicating relationship with gear teeth (46) of said flexspline device;
so that the gear teeth (44, 46) are engageable with one another in an advancing wave, to permit rotary motion to be provided to an output shaft (32), which output shaft is operable to actuate a mechanism within a hermetically sealed contamination-free housing (56);
**characterised by** a single solid forging of steel which defines said side wall (19), said diaphragm (17) and said mounting flange (22), said side wall, diaphragm and mounting flange all being formed integrally by machining from said single forging, thereby to form a unitary flexspline device (15).

4. The harmonic drive transmission device of claim 3 in combination with a hermetically sealed housing (56), wherein said integral mounting flange (22) is attached to the inner side of said housing (56).

## Patentansprüche

1. Verfahren zur Herstellung eines Spannungswellen-Getriebebauteiles (15) mit flexibler Verzahnung, das ein flexibles, verzahntes Becherteil mit einer integralen Membran (17) an einem geschlossenen Ende (20) und einem integralen Befestigungsflansch (22) an seinem anderen, offenen Ende aufweist, umfassend die folgenden Schritte:
Einspannen eines massiven Stahlschmiedestücks (10) in einer Einspannvorrichtung einer Metalldrehmaschine:
Formen eines zentralen Hohlraumes innerhalb des Schmiedestücks;
Drehen der Außenfläche des Schmiedestücks zu einer vorgegebenen äußeren Abmessung oder Profil;
maschinelles Bearbeiten des integralen Befestigungsflansches (22) an dem offenen Ende des flexiblen Getriebebauteiles zu seiner fertigen äußeren Bauform.

2. Verfahren nach Anspruch 1, umfassend die folgenden Schritte:
Schruppdrehen der Außenfläche des Schmiedestücks;
Anordnen des geschruppten Schmiedestücks in einer Werkzeugmaschine zum vollen Ausbohren des inneren Profils oder Innendurchmessers des flexiblen Becherteils;
Anordnen der fertigen Innenbohrung auf einem Drehdorn zum Abstützen des flexiblen Bauteiles;
Saugziehen eines legierten Stahls mit niedrigem Schmelzpunkt in den flexiblen Becherteil zum inneren ringförmigen Abstützen der flexiblen, verzahnten Becherteilwand während nachfolgender maschineller Bearbeitungsvorgänge; und
Abstützen des Drehdorns in einer Drehmaschine, während die flexible, verzahnte Becherteilwand auf eine fertige Dickenabmessung von ungefähr 0,25 mm (0,010 Zoll) und die integrale Membran auf eine fertige Dickenabmessung von ungefähr 0,51 mm (0,020 Zoll) heruntergedreht werden.

3. Spannungswellen-Getriebe zum Übertragen von Rotationsenergie von einer Antriebsquelle auf einen Abtriebsmechanismus über eine Wand eines abgedichteten Gehäuses, indem eine hermetisch abgedichtete Beziehung zu dem Abtriebsmechanismus innerhalb des abgedichteten Gehäuses bereitgestellt wird, umfassend:
eine Antriebswelle (54) mit einem Wellengenerator (50), der an einem Ende davon angeordnet ist, wobei der Wellengenerator innerhalb eines flexiblen, verzahnten Getriebebauteiles (15), das ein flexibles, verzahntes Becherteil mit einer Umfangswand (19), die an einem Ende durch eine Membran (17) geschlossen ist, und mit einem Befestigungsflansch (22) am anderen, offenen Ende der Umfangswand aufweist, drehend angeordnet ist; und
einen verzahnten Kreisring (40), der um das flexible, verzahnte Getriebebauteil drehend abgestützt und mit einer Verzahnung (44) versehen ist, in einer bewegungsübertragenden Verzahnungsbeziehung mit der Verzahnung (46) des flexiblen, verzahnten Getriebebauteiles;
so dass die Verzahnungen (44, 46) in einer vorwärts laufenden Welle miteinander in Eingriff stehen, um einer Drehbewegung zu erlauben, auf eine Abtriebswelle (32) übertragen zu werden, welche Abtriebswelle betreibbar ist, um einen Mechanismus innerhalb eines hermetisch abgedichteten verschmutzungsfreien Gehäuses (56) zu betätigen;
**gekennzeichnet durch** ein einziges massives Schmiedestück aus Stahl, das die Umfangswand (19), die Membran (17) und den Befestigungsflansch (22) bildet, wobei die Umfangswand, die Membran und der Befestigungsflansch gemeinsam **durch** maschinelles Bearbeiten einstückig aus dem einzigen Schmiedestück gebildet sind, um **dadurch** ein einteiliges Getriebebauteil (15) mit flexibler Verzahnung zu bilden.

4. Spannungswellen-Getriebe nach Anspruch 3 in Kombination mit einem hermetisch abgedichteten Gehäuse (56), bei dem der integrale Befestigungsflansch (22) an der Innenseite des Gehäuses (56) befestigt ist.

## Revendications

1. Procédé de fabrication d'un dispositif à cannelures souples (15) de transmission harmonique, comportant une coupelle à cannelures souples ayant un diaphragme (17) venu de matière à une première extrémité fermée (20) et un rebord de montage venu de matière (22) à son autre extrémité ouverte, comportant les étapes consistant à :
agencer une pièce forgée en acier plein (10) dans un agencement de mandrin d'une machine à tourner les métaux,
former un passage central dans ladite pièce forgée,
tourner la surface extérieure de ladite pièce forgée jusqu'à une dimension ou un profil extérieur préétabli,
usiner ledit rebord de montage venu de matière (22) à l'extrémité ouverte dudit dispositif à cannelures souples, jusqu'à sa configuration extérieure finie.

2. Procédé selon la revendication 1, comportant les étapes consistant à :
tourner grossièrement la surface extérieure de ladite pièce forgée,
placer ladite pièce forgée grossièrement tournée dans une machine-outil pour le perçage complet d'un alésage ayant le profil ou le diamètre intérieur de ladite coupelle à cannelures souples,
placer l'alésage intérieur fini (19) sur un mandrin tournant pour supporter ledit dispositif à cannelures souples,
étirer par aspiration un acier allié à bas point de fusion dans ladite coupelle à cannelures souples, pour le support annulaire interne de la paroi de cannelures souples pendant des opérations d'usinage ultérieures, et
supporter ledit mandrin tournant dans une machine tournante, tout en tournant ladite paroi de cannelures souples jusqu'à une dimension ayant une épaisseur finie d'environ 0,25 mm (0,010 pouce) et ladite membrane venue de matière jusqu'à une dimension en épaisseur d'environ 0,51 mm (0,020 pouce).

3. Dispositif de transmission d'entraînement harmonique destinée à la transmission d'une énergie rotative à partir d'une source d'entrée vers un mécanisme de sortie dans une paroi d'un boîtier scellé tout en fournissant une relation hermétiquement scellée avec ledit mécanisme de sortie situé dans ledit boîtier scellé, comportant :
un arbre d'entrée (54) ayant un générateur d'ondes (50) agencé à une première extrémité de celui-ci, ledit générateur d'ondes étant disposé de manière rotative dans un dispositif à cannelures souples (15) comportant une coupelle à cannelures souples ayant une paroi latérale (19), fermée à une première extrémité par un diaphragme (17), et ayant un rebord de montage (22) à l'autre extrémité ouverte de la paroi latérale, et
un arbre cannelé circulaire (40) supporté de manière rotative autour dudit dispositif à cannelures souples et muni de dents d'engrenage (44) dans une relation communiquant un mouvement de dent d'engrenage à des dents d'engrenage (46) dudit dispositif à cannelures souples,
de sorte que les dents d'engrenage (44, 46) peuvent venir en prise les unes avec les autres dans une onde avançante, pour permettre qu'un mouvement rotatif soit fourni à un arbre de sortie (32), lequel arbre de sortie peut être opérationnel pour actionner un mécanisme situé dans un boîtier hermétiquement scellé sans contamination (56),
**caractérisé en ce qu'**une seule pièce forgée pleine en acier définit ladite paroi latérale (19), ledit diaphragme (17) et ledit rebord de montage (22), ladite paroi latérale, le diaphragme et le rebord de montage étant tous formés venus de matière par usinage à partir d'une seule pièce forgée, pour former ainsi un dispositif à cannelures souples unitaire (15).

4. Dispositif de transmission d'entraînement harmonique selon la revendication 3 en combinaison avec un boîtier hermétiquement scellé (56), dans lequel ledit rebord de montage venu de matière (22) est relié au côté intérieur dudit boîtier (56).
